# EUROPÄISCHE PATENTSCHRIFT

(11) **EP 3 303 109 B1**
(45) Veröffentlichungstag und Bekanntmachung des Hinweises auf die Patenterteilung: **06.10.2021**
(21) Anmeldenummer: 16723689.2
(22) Anmeldetag: 04.05.2016
(51) Int. Cl.: B62D 63/02

(54) **GRUPPE VON KRAFTFAHRZEUGEN**
GROUP OF MOTOR VEHICLES
GROUPE DE VÉHICULES À MOTEUR

(30) Priorität: 03.06.2015 DE 102015210330
(43) Veröffentlichungstag der Anmeldung: 11.04.2018
(73) Patentinhaber: Bayerische Motoren Werke Aktiengesellschaft, 80809 München (DE)
(72) Erfinder: HAUG, Wolfram, 82054 Sauerlach (DE); REICHELT, Mike, 85077 Manching (DE); KOEHN, Philip, 81545 Muenchen (DE); AHLERS, Michael, 80995 München (DE); KUTZSCHBACH, Joerg, 85238 Petershausen (DE)
(86) Internationale Anmeldenummer: PCT/EP2016/060052
(87) Internationale Veröffentlichungsnummer: WO 2016/192921

(56) Entgegenhaltungen:
- EP-A1- 0 291 385
- EP-A1- 0 512 576
- EP-A1- 0 584 576
- WO-A1-2004/024543
- WO-A1-2006/026942
- DE-A1- 2 923 874
- DE-A1- 19 701 571
- DE-A1- 19 833 395
- DE-A1- 19 860 794
- DE-A1-102004 045 868
- DE-A1-102007 001 719
- DE-A1-102007 021 876
- DE-A1-102009 050 470
- DE-A1-102010 005 426

## Beschreibung

Die Erfindung betrifft eine Gruppe von Kraftfahrzeugen nach dem Oberbegriff des Anspruchs 1.

Kraftfahrzeuge sind in Abhängigkeit von ihrer Form, ihrer Größe und/oder ihrer Preisstellung in unterschiedliche Fahrzeugklassen eingeteilt. Anstelle des Begriffs "Fahrzeugklasse" wird dabei auch der Begriff "Fahrzeugsegment" verwendet. Beispielsweise hat die Europäische Kommission folgende Fahrzeugklassen für die wettbewerbsrechtliche Marktabgrenzung definiert: Kleinstwagen, Kleinwagen, Mittelklasse, obere Mittelklasse, Oberklasse, Luxusklasse. Das Deutsche Kraftfahrt-Bundesamt unterscheidet folgende Fahrzeugklassen: Minis, Kleinwagen, Kompaktklasse, Mittelklasse, obere Mittelklasse, Oberklasse. Daneben gibt es weitere Kategorien, beispielsweise für Geländewagen, Sportwagen, Cabrios, Minivans, Mehrzweckfahrzeuge.

Zur Erhöhung der Wirtschaftlichkeit des Fertigungsprozesses verwenden Hersteller von Kraftfahrzeugen für die Rohbaukarosserien ihrer Kraftfahrzeuge so weit als möglich einheitliche Rohbaukomponenten. Ziel ist hierbei, solche "Gleichteile" auch übergreifend bei Kraftfahrzeugen unterschiedlicher Fahrzeugklassen einzusetzen. Durch die Verwendung von Gleichteilen können im Presswerk und im Karosserierohbau die Investitionen in die Werkzeuge und Anlagen deutlich reduziert werden. Die Verwendung von Gleichteilen ist bei einigen Herstellern von Kraftfahrzeugen beispielsweise unter dem Begriff "Plattformstrategie" bekannt.

So ist es beispielsweise aus der WO 2013/076016 A1 bekannt, eine Gruppe von Kraftfahrzeugen, die unterschiedlichen Fahrzeugklassen angehören, durch wenigstens zwei unterschiedlich ausgeführte Heckmodule ("Hinterbau" des Kraftfahrzeugs) zu bilden. Hierbei sind die hinteren Längsträger der Heckmodule in ihrem mittleren und hinteren Teilbereich einheitlich, also als Gleichteile, ausgeführt. Lediglich der vordere Teilbereich der hinteren Längsträger ist je nach Fahrzeugklasse unterschiedlich gestaltet. Die DE 198 60 794 zeigt, dass sich (u.a.) drei Gruppen von Kraftfahrzeugen unterschiedlicher Fahrzeugklassen aus der Kombination von unterschiedlichen Vorderwagen und Fahrerkabinenmodulen ergeben. Hierfür wird gemäß dieser Offenbarung ein in der Grundstruktur gleiches Basismodul als Fahrerkabinenmodul verwendet.

Aufgabe der Erfindung ist es, einen neuen Ansatz für die Herstellung von Rohbaukarosserien für Kraftfahrzeuge unterschiedlicher Fahrzeugklassen bereitzustellen, der bei möglichst weitreichender Verwendung von Gleichteilen insbesondere im vorderen und im mittleren Abschnitt der Tragstruktur des Kraftfahrzeugs ("Vorderwagenmodul" bzw. "Fahrgastzellenmodul") eine deutliche Differenzierung zwischen den unterschiedlichen Fahrzeugklassen ermöglicht.

Diese Aufgabe wird durch eine Gruppe von Kraftfahrzeugen mit den Merkmalen von Anspruch 1 gelöst.

Unter einer Gruppe von Kraftfahrzeugen ist in Zusammenhang mit der vorliegenden Erfindung die Gesamtheit von Kraftfahrzeugen zumindest einer ersten und einer zweiten Fahrzeugbaureihe zu verstehen, wobei die beiden Fahrzeugbaureihen unterschiedlichen Fahrzeugklassen angehören. Selbstverständlich können auch die Rohbaukarosserien von mehr als zwei Fahrzeugbaureihen zu einer Gruppe von Kraftfahrzeugen zusammengefasst werden.

Kerngedanke der Erfindung ist es, ein "Vorderwagenmodul" und ein "Fahrgastzellenmodul" bereitzustellen, wobei die beiden Module trotz unterschiedlicher Ausgestaltung ohne Einschränkung kombinierbar sind und auf diese Weise Kraftfahrzeuge unterschiedlicher Fahrzeugklassen darstellbar sind. Grundgedanke ist hierbei, einerseits das Vorderwagenmodul mit unterschiedlichen Motorträgerabständen und andererseits das Fahrgastzellenmodul mit unterschiedlichen Abständen der Vordersitze zu versehen, im Übrigen jedoch bei den beiden Modulen so viele Anschlussmaße als möglich einheitlich zu gestalten.

Damit können vereinheitlichte Schnittstellen bereitgestellt werden, um die beiden Module ungeachtet ihrer unterschiedlichen Ausgestaltungen miteinander kombinieren zu können.

Dabei ist jedes der wenigstens vier Module als "Gleichteil" ausgeführt, das heißt, alle Varianten eines der Module sind "Gleichteile" (siehe unten stehende Definition).

Die Abstände der Motorträger bzw. der Vordersitze beziehen sich jeweils auf die Breitenerstreckung Y des Fahrzeugs, also quer zur Fahrzeuglängsrichtung X.

Durch die Erfindung lässt sich in besonders effizienter Weise eine Breitenspreizung am Vorderwagenmodul für unterschiedliche Antriebsaggregate und eine Breitenspreizung am Fahrgastzellenmodul für unterschiedliche Innenraumbreiten schaffen. Diese beiden Maßnahmen sind, wenn selbstverständlich auch nicht ausschließlich, so jedoch maßgeblich, für eine Differenzierung von Kraftfahrzeugen unterschiedlichen Fahrzeugklassen geeignet.

Unter "unterschiedlichem Abstand der Vordersitze" ist zu verstehen, dass sich dieser Abstand tatsächlich auf die Sitzposition eines Insassen auswirkt, also ein größerer Abstand der Vordersitze sich in einem größeren Abstand der Insassen zueinander auswirkt, also aufgrund des unterschiedlichen Abstands der Vordersitze die so genannten H-Punkte (Hüftpunkte) oder R-Punkte (Sitzreferenzpunkte) der Insassen in Fahrzeugquerrichtung Y unterschiedlich weit auseinander liegen. Maßgeblich ist, entsprechend der Fahrzeugklassen adäquate Sitzabstände zu erzeugen. Zusätzlich zum Abstand der Vordersitze zueinander können die Fahrgastzellenmodule auch unterschiedliche Positionen der Sitze in Fahrzeuglängsrichtung X aufweisen.

Durch die Erfindung lassen sich in vorteilhafter Weise Kraftfahrzeuge dreier Fahrzeugklassen darstellen, beispielsweise Kraftfahrzeuge der Oberklasse, der oberen Mittelklasse und der Mittelklasse. Diese Darstellung kann auch weitere aus den einzelnen Fahrzeugklassen abgeleitete Kraftfahrzeuge umfassen, wie beispielsweise Geländewagen, Sportwagen, Cabrios, Minivans, Mehrzweckfahrzeuge etc.

Wichtig für die gesamte Auslegung und das äußere Erscheinungsbild eines Kraftfahrzeugs ist dessen Abstand zwischen der Mitte der Vorderräder und der Instrumententafel ("dash-axle-Abstand"). Zur Differenzierung zwischen Fahrzeugen der einzelnen Fahrzeugklassen ist dieser Abstand entsprechend im Rahmen der Möglichkeiten zur Skalierung zu variieren.

Das Vorderwagenmodul ist in Ausgestaltung der Erfindung so konzipiert, dass es einheitliche Aufnahmen für unterschiedliche Arten von Antriebssystemen (Heckantrieb oder Allradantrieb), von Antriebsaggregaten (beispielsweise Verbrennungskraftmaschinen in Otto- oder Dieselbauweise, Reihenmotoren, V-Motoren, gegebenenfalls jeweils mit unterschiedlicher Zylinderanzahl), von Getrieben (Schaltgetriebe, Automatikgetriebe, Doppelkupplungsgetriebe) und von Vorderachssystemen (beispielsweise Federbeinachse, Doppelquerlenkerachse) aufweist. Mit der erfindungsgemäßen Ausgestaltung wird erreicht, dass es in jedem Vorderwagenmodul nur noch einheitliche Aufnahmen für die jeweiligen Aggregate und Systeme gibt. Damit verbunden sind gegebenenfalls Einschränkungen dergestalt, dass beispielsweise in einem "kleinen" Vorderwagenmodul kein "Platz" für die größte Kategorie von Antriebsaggregaten ist und somit diese Kombinationsmöglichkeit ausscheidet, was jedoch aus wirtschaftlichen Gründen in Kauf genommen wird. Die sich aus technischen Gründen ergebenden Ausschlüsse für bestimmte Kombinationsmöglichkeiten werden jedoch durch die Vorteile aus der Vereinheitlichung der Module und damit der wirtschaftlicheren Herstellung ausgeglichen.

Maßgeblicher Baustein für die erfindungsgemäße Gruppe von Kraftfahrzeugen ist der Einsatz einheitlicher Antriebsstränge für die Kraftfahrzeuge innerhalb eines Vorderwagenmoduls, mit einheitlichen Lagerstellen für Motor und/oder Getriebe, mit einheitlichen Neigungswinkeln der Motoren, unabhängig davon, ob es sich um einen Benzin- oder um einen Dieselmotor handelt, ob das Kraftfahrzeug mit Heckantrieb oder mit Allradantrieb ausgestattet ist, ob das Kraftfahrzeug zusätzlich zum Verbrennungsmotor noch einen Elektromotor als Antriebsaggregat aufweist (Hybridfahrzeug) etc.

Ein weiterer Baustein bei der Vereinheitlichung des Antriebsstrangs ist beispielsweise der durchgängige Einsatz eines Ketten-Verteilergetriebes anstelle eines Zahnrad-Verteilergetriebes, mit Vorteilen hinsichtlich Wirkungsgrad, Kosten und Gewicht, bevorzugt in Verbindung mit einer "getriebenahen" Abtriebswelle vom Verteilergetriebe zum Vorderachsgetriebe. Auch die Lage des Vorderachssystems und/oder des Lenkgetriebes und/oder des Verteilergetriebeausgangs und/oder des Vorderachsgetriebes ist bevorzugt vereinheitlicht.

Die einheitliche Lage des Antriebsstrangs ist beispielsweise durch das Maß zwischen der Mitte der Vorderräder und einer festgelegen Koordinate des Antriebsaggregats definiert. Ebenso kann beispielsweise das Maß zwischen der Hinterkante des Antriebsaggregats und der Lage des Ausgangs des Verteilergetriebes vereinheitlicht sein. In besonders vorteilhafter Weise ist die Lage der Motorlager und/oder der Getriebelager vereinheitlicht.

Die motorspezifischen Schnittstellen, beispielsweise die Grenzkonturen des motorauslassseitigen Endes der Abgasanlage ("Hot End") und/oder der Luftansauganlage, die Lage des Getriebes und/oder des Vorderachsgetriebes etc. sind für alle Varianten von Motorisierungen innerhalb eines Moduls identisch.

In Ausgestaltung der Erfindung ist das Fahrgastzellenmodul so ausgebildet, dass es je nach Fahrzeugklasse Fahrer- und Beifahrersitz unterschiedlich positioniert, und zwar sowohl in Bezug auf die Fahrzeugquerrichtung und/oder auch in Bezug auf die Fahrzeuglängsrichtung. Zusätzlich kann auch die Höhenpositionierung von Fahrerund Beifahrersitz bei unterschiedlichen Fahrgastzellenmodulen verschieden sein, um eine Differenzierung beispielsweise zwischen Limousinen, Coupes oder dergleichen einerseits und Geländewagen, Mehrzweckfahrzeugen oder dergleichen andererseits zu erreichen.

In Fahrzeugquerrichtung ergeben sich, wie bereits oben erläutert, unterschiedliche Abstände der H-Punkte bzw. R-Punkte im zwischen Fahrer und Beifahrer. Dieser Abstand zwischen den beiden vorderen Insassen eines Kraftfahrzeugs ist entscheidend für das Raumgefühl in der jeweiligen Fahrzeugklasse. Des Weiteren spielt hier die Ausgestaltung der Mittelkonsole und/oder des "Center Stack" eine wichtige Rolle.

Der Abstand zwischen den Vordersitzen kann auch die Dimensionierung und die Positionierung von Einbauten im Innenraum beeinflussen, beispielsweise die Größe einer Klimatisierungseinheit und/oder eines Head-Up-Displays, die Lage der Pedale und/oder der Lenkungsanlage, so dass diese Einbauten adäquat zur Fahrzeugklasse ausgelegt und positioniert werden können. Bei Klimatisierungseinheit und Head-Up-Display wirkt sich dies auf die Position in Fahrzeuglängsrichtung X aus. Die Position der Pedale und der Lenkungsanlage bezieht sich vornehmlich die Fahrzeugquerrichtung Y. Ferner kann das Fahrgastzellenmodul so ausgestaltet sein, dass es im Bedarfsfall einen so genannten "Zentralbass", also einen zentral angeordneten Lautsprecher zur Wiedergabe der tiefen Frequenzen, aufnehmen kann.

In Fahrzeuglängsrichtung erfolgt durch die Positionierung der Sitze für die vorderen Insassen die Größenabstufung (Skalierung) der Kraftfahrzeuge unterschiedlicher Fahrzeugklassen im Fahrgastzellenbereich. Dies wird durch unterschiedliche Lagen der Sitzquerträger für Fahrer- und Beifahrersitz in Bezug auf die Stirnwand erreicht. Durch diese Skalierung werden die äußere Größe der Fahrzeuge und/oder das Raumangebot im Inneren der Fahrzeuge dargestellt. Das Maß hierfür ist der Abstand zwischen der Mitte der Vorderräder und dem R-Punkt. In analoger Weise kann der Abstand des R-Punkts zum Motor als Referenz herangezogen werden.

Des Weiteren kann das Fahrgastzellenmodul zur Aufnahme unterschiedlicher Klimatisierungseinheiten ausgebildet sein, beispielsweise einer 2-zonigen Klimatisierungseinheit (mit Regelung des Klimas an den Vordersitzen; mit eingeschränkter Regelung des Klimas für die Fondsitze handelt es sich um eine so genannte 2,5-zonige Klimatisierungseinheit) oder einer 4-zonigen Klimatisierungseinheit mit unabhängiger Regelung des Klimas an Vorder- und Rücksitzen. Die Klimatisierungseinheit ist bevorzugt luftgeregelt.

Unter Klimatisierungseinheit ist ein System zur Heizung und/oder Kühlung des Fahrzeuginnenraums zu verstehen.

Ferner kann das Fahrgastzellenmodul mit unterschiedlich großen Mittelkonsolen (in Bezug auf Breite und/oder Länge) ausgestattet sein. Maßgeblich ist hier die Erstreckung in Fahrzeuglängsrichtung X. Außerdem kann das Fahrgastzellenmodul unterschiedliche Fahrerassistenzeinheiten aufnehmen, wie beispielsweise ein Head-Up-Display. Ebenso können unterschiedliche Entertainmenteinheiten vorgesehen sein, wie beispielsweise unterschiedliche Lautsprecheranlagen.

In bevorzugter Ausgestaltung der Erfindung weisen die Fahrgastzellenmodule einheitliche Stirnwandbereiche auf, so dass unterschiedliche Vorderwagenmodule angebunden werden können. Damit bildet die Stirnwand ein "Kommunalitätszentrum", also eine einheitliche Schnittstelle zwischen unterschiedlichen Vorderwagen- und Fahrgastzellenmodulen. Von Vorteil ist hierbei, wenn der Stirnwandbereich einheitliche Durchbrüche für Bauteile (beispielsweise Elemente der Lenkung, der Klimatisierungseinheit, der Bremsanlage, von Tüllen für Leitungen, etc.) und für Leitungen aufweist. Bei den Leitungen kann es sich um elektrische Leitungen, insbesondere einen Abschnitt eines Kabelbaums oder um medienführende Leitungen handeln. Bei den Bauteilen kann es sich beispielsweise um die Lenksäule, Bestandteile der Pedalerie, des Bremsgeräts etc. handeln. Die Stirnwand ist so ausgebildet, dass vorderseitig an die Stirnwand die wenigstens beiden Vorderwagenmodule mit ihren unterschiedlichen Abständen der Motorträger ohne Einschränkung angeflanscht werden können.

Die Stirnwand hat bevorzugt einheitliche Durchtrittsebenen, also Bereiche, die für die Durchführung von Bauteilen und Leitungen vorgesehen sind, so dass die exakten Durchgangsöffnungen gegebenenfalls im Einzelfall eingebracht werden können. Daneben hat die Stirnwand auch "variable" Bereiche, um beispielsweise unterschiedliche Höhenlagen der Klimatisierungseinheit realisieren zu können, beispielsweise zur Darstellung des Unterschieds zwischen einem sportlichen Fahrzeug und einem Sports Utility Vehicle innerhalb der Gruppe der Fahrzeuge. Auch die jeweilige fahrzeugspezifische Anpassung beispielsweise hinsichtlich der Position der Windschutzscheibe und/oder des Windlaufs kann mit den variablen Bereichen der einheitlichen Stirnwand realisiert werden.

Die Skalierung der unterschiedlichen Höhen der R-Punkte wird durch eine unterschiedliche Positionierung der Stirnwand in Höhenrichtung (Z) im Fahrzeug erreicht. In besonderer Weise ergibt sich die Skalierung in Höhenrichtung Z durch unterschiedliche Verteilung der Durchbrüche entlang der Höhenerstreckung der Stirnwand.

Wichtig für die gesamte Auslegung und das äußere Erscheinungsbild eines Kraftfahrzeugs ist dessen Abstand zwischen der Mitte der Vorderräder und der Instrumententafel ("dash-axle-Abstand"). Zur Differenzierung zwischen Fahrzeugen der einzelnen Fahrzeugklassen ist dieser Abstand entsprechend im Rahmen der Möglichkeiten zur Skalierung zu variieren.

In weiterer Ausgestaltung der Erfindung können die Vorderwagen- und die Fahrgastzellenmodule mit wenigstens zwei unterschiedlichen Heckmodulen kombiniert werden. Die Heckmodule sind mit einheitlichen Aufnahmen für unterschiedliche Hinterachssysteme (beispielsweise Mehrlenkerhinterachsen in unterschiedlicher Ausgestaltung) und/oder für unterschiedliche Arten von Nachschalldämpfern (beispielsweise Schalendämpfer, Wickeldämpfer) und/oder Kraftstoffzusatzsysteme (beispielsweise Harnstoffzuführung) und/oder Hinterachsregelsysteme (bei Luftfederung) und/oder Ersatzradkonzepte (mit vollwertigem Ersatzrad oder mit "Notrad" oder ohne Ersatzrad).

Im Heckmodul ist in Ausgestaltung der Erfindung eine "Aufnahmewanne" für Steuergeräte, Medienbehälter etc. vorgesehen. Der Bauraum für die Aufnahmewanne ist bei allen Heckmodulen vorgehalten. Die Anbindungspunkte für die Aufnahmewanne sind bei allen Heckmodulen vereinheitlicht.

Bevorzugt ist benachbart zur Aufnahmewanne ein querliegender Nachschalldämpfer der Abgasanlage vorgesehen, beispielsweise in der Ausführung als Wickelschalldämpfer.

Besonders vorteilhaft ist es, wenn die Anbindungspunkte für ein Energiespeichermodul im Bereich unter der Rücksitzbank bei allen erfindungsgemäßen Kraftfahrzeugen in identischer Weise vorgesehen sind. Somit kann für alle Kraftfahrzeuge der erfindungsgemäßen Gruppe, grundsätzlich ohne Einschränkung, eine "Hybridisierung", also die Ausstattung mit einem Elektromotor zusätzlich zum Verbrennungsmotor, vorgenommen werden, indem der Platzbedarf für einen elektrischen Energiespeicher vorgehalten ist. Somit bildet das Energiespeichermodul ein "Kommunalitätszentrum" im Heckmodul, vergleichbar der oben beschriebenen Stirnwand als "Kommunalitätszentrum" zwischen unterschiedlichen Vorderwagen- und Fahrgastzellenmodulen.

Die Erfindung betrifft bevorzugt Kraftfahrzeuge, die grundsätzlich mit Heckantrieb ("Standardantrieb") ausgestattet sind und alternativ (gegebenenfalls in wenigstens einer Modellvariante ausschließlich) mit Allradantrieb versehen sind.

Maßgeblich ist, dass für die Fahrgastzellenmodule und damit für die gesamte Gruppe von Kraftfahrzeugen eine einheitliche Bodengruppe verwendet wird. Die einheitliche Bodengruppe ist durch eine gleiche Breite für alle Fahrzeuge der Gruppe gekennzeichnet. Unterschiedliche Fahrzeugbreiten werden beispielsweise durch unterschiedliche Schwellerverkleidungen dargestellt. Ebenso können unterschiedliche Seitenrahmen zum Einsatz kommen. Die Bodengruppe muss so beschaffen sein, dass an sie Vorderwagenmodule mit unterschiedlichen Abständen der Motorträger angebunden werden können. Die Spreizung der Positionen der Vordersitze und/oder der Fondsitze erfolgt durch unterschiedliche Sitzquerträger, die gegebenenfalls zusätzlich Konsolen für die Einstellung der Höhenlage aufweisen können. Auch kann der Mitteltunnel in der Bodengruppe so gestaltet sein, dass er sowohl für Kraftfahrzeuge mit Standardantrieb als auch mit Allradantrieb geeignet ist. Die unterschiedliche Länge der einzelnen Fahrzeuge der Gruppe wird unter Einsatz einer einheitlichen Bodengruppe gegebenenfalls durch Beschnitt oder durch Anstückeln, bevorzugt im Bereich der Fondsitze, erreicht.

Wesentliche Merkmale, die in den einzelnen Modulen der erfindungsgemäßen Gruppe von Kraftfahrzeugen verwirklicht sind, werden nachfolgend aufgezählt: ein einheitlicher Antriebsstrang und/oder ein durchgehendes Konzept zur Realisierung eines Hybridantriebs durch Vorsehen eines Bauraums für einen elektrischen Speicher und/oder eine einheitliche Bodengruppe (die gleichermaßen für Fahrzeuge mit Heck- und mit Allradantrieb geeignet ist) und/oder eine einheitliche Stirnwand und/oder eine bevorzugt luftgeregelte Klimatisierungseinheit (durch die Luftregelung kann die Klimatisierungseinheit an der Stirnwand angeordnet werden) und/oder ein Hinterachssystem mit einer Raumlenkerachse in verschiedenen Ausgestaltungen und/oder eine Aufnahmewanne im Heckmodul, gegebenenfalls in Verbindung mit einem querliegenden Nachschalldämpfer.

Wie bereits oben erwähnt, ergeben sich in besonderer Weise Vorteile bei Kraftfahrzeugen mit Standardantrieb, die eine Bodengruppe aufweisen, die so gestaltet ist, dass sie auch dann eingesetzt werden kann, wenn diese Kraftfahrzeuge mit Allradantrieb ausgestattet sind. Somit ist es nicht erforderlich, für Antriebsvarianten des Kraftfahrzeugs Varianten der Bodengruppe vorzuhalten.

Weiterhin ergeben sich in besonderer Weise Vorteile bei Kraftfahrzeugen, die mit einem Verbrennungsmotor als Antriebsaggregat ausgestattet sind und die eine Bodengruppe aufweisen, die so gestaltet ist, dass sie auch dann eingesetzt werden kann, wenn diese Kraftfahrzeuge einen Elektromotor als zusätzliches Antriebsaggregat aufweisen. In diesem Fall kann es vorteilhaft sein, die Bodengruppe vom Stirnwandbereich lediglich bis zum so genannten Fersenblech einheitlich zu gestalten, während der Bereich des Bodenblechs hinter dem Fersenblech je nach Ausführung nur mit Verbrennungsmotor (Kraftstofftank im Bereich unterhalb der Rücksitze) oder mit Hybridantrieb (Batterie im Bereich unterhalb der Rücksitze und Kraftstofftank in einem Bereich hinter dem Fersenblech) unterschiedlich gestaltet ist.

Der Begriff "Gleichteil" (ebenso wie der Begriff "einheitliches" Bauteil) umfasst solche Rohbauteile, die mit demselben Tiefziehwerkzeug hergestellt werden. Im Anschluss an die Herstellung im Presswerk können diese "Gleichteile" durch Verkürzen oder durch Verlängern in ihrer Längendimension verändert werden. Beim Verkürzen durch Ablängen wird beispielsweise ein Längsträger oder ein tiefgezogener flächiger Blechabschnitt, der für Kraftfahrzeuge zweier oder mehrerer Fahrzeugklassen übergreifend eingesetzt wird, je nach Fahrzeugklasse durch Beschnitt an einem seiner Endabschnitte für die Kraftfahrzeuge der kleineren Fahrzeugklasse(n) verkürzt. Alternativ kann der Längsträger oder der Blechabschnitt auch durch Ansetzen eines Verlängerungsstücks je nach Fahrzeugklasse verlängert werden, durch Nieten, Schweißen, Schrauben, Kleben etc. Bei diesen Längenanpassungen, durch Ablängen (Beschnitt) oder durch Verlängern (Anstückeln) handelt es sich um Fertigungsschritte, die als nachträgliche Maßnahme an zuvor mit einem einheitlichen Tiefziehwerkzeug gefertigten "Gleichteilen" vorgenommen werden, so dass für diese nachträglichen Maßnahmen nur vergleichsweise geringe Arbeits- und Werkzeugkosten anfallen.

Tiefgezogene Blechbauteile sind beispielsweise Stirnwand, Bodenblech, Längsträger etc. Das Blechmaterial kann entlang seiner Flächenerstreckung homogen sein oder zum Beispiel von einem so genannten "taylored blank" gebildet werden.

Weiterhin umfasst der Begriff "Gleichteil" (ebenso wie der Begriff "einheitliches" Bauteil) solche Rohbauteile, die mit demselben Gusswerkzeug hergestellt werden. Der Vorteil von Gussbauteilen liegt unter anderem in den vielfältigen Möglichkeiten der Integration von Funktionen, Anbauteilen, Verbindungsbereichen etc. Beispielsweise können Federbeinaufnahmen in vorteilhafter Weise von Gussbauteilen gebildet werden.

Weiterhin umfasst der Begriff "Gleichteil" (ebenso wie der Begriff "einheitliches" Bauteil) solche Rohbauteile, die mit demselben Strangpresswerkzeug hergestellt werden. Strangpressprofile weisen einen entlang ihrer Längserstreckung gleichbleibenden Querschnitt auf. In besonderer Weise eignen sich Strangpressprofile für die Ausbildung von Längsträgern. Strangpressprofile können in unterschiedlichen Längen hergestellt werden oder nachträglich durch Ablängen auf die erforderliche Länge verkürzt werden. Außerdem können Strangpressprofile durch nachträgliche Bearbeitung abschnittsweise in ihrem Querschnitt verändert werden, wie vor zum Beispiel durch Befräsen zum Entfernen einer Kammer in einem Mehrkammerprofil.

Grundsätzlich können an den "Gleichteilen" jedes einzelnen Moduls je nach Fahrzeugklasse auch unterschiedliche Lochbilder für die Verbindung des "Gleichteils" mit der Rohbaukarosserie und/oder mit Anbauteilen angebracht werden, durch Stanzen, Bohren etc. Wesentlich ist jedoch für die "Gleichteile", dass nach der Herstellung in demselben Tiefziehwerkzeug keine weiteren formgebenden Veränderungen stattfinden. Durch den Einsatz eines fahrzeugklassenübergreifend einheitlichen Tiefziehwerkzeugs werden die Investitionskosten für die Fertigungseinrichtungen maßgeblich reduziert. Unterschiedliche Lochbilder sind zum Beispiel bei der Herstellung von Kraftfahrzeugen in verschiedenen Länderausführungen als so genannte "Linkslenker" bzw. "Rechtslenker" erforderlich, wegen der seitenvertauschten Durchbrüche in der Stirnwand für Lenkung, Bremse etc.

Selbstverständlich können "Gleichteile" zumindest teilweise auch als identische Bauteile ausgeführt sein.

Die in Zusammenhang mit der vorliegenden Erfindung verwendeten Lagebezeichnungen "vorne" und "hinten" sowie davon abgeleitete Begriffe beziehen sich auf die Einbaulage der betreffenden Bauteile im Kraftfahrzeug und auf die Fahrtrichtung des Kraftfahrzeugs.

Mögliche Ausführungsbeispiele der Erfindung sind in der Zeichnung dargestellt und werden nachfolgend näher erläutert. Es zeigt:
Fig. 1 eine schematische Übersicht zu den Kombinationsmöglichkeiten innerhalb einer erfindungsgemäßen Gruppe von Kraftfahrzeugen,
Fig. 2 bis 4 Beispiele für Kombinationen innerhalb der erfindungsgemäßen Gruppe von Kraftfahrzeugen,
Fig. 5 eine Zusammenstellung verschiedener Kombinationen innerhalb der erfindungsgemäßen Gruppe von Kraftfahrzeugen,
Fig. 6 und 6a verschiedene Ausprägungen einer einheitlichen Stirnwand,
Fig. 7 bis 11 Beispiele für Kombinationen von Vorderwagen- und Fahrgastzellenmodulen innerhalb der erfindungsgemäßen Gruppe von Kraftfahrzeugen,
Fig. 12 eine schematische Umrissdarstellung auf der Grundlage eines festgelegten Antriebsstrangs und
Fig. 13 eine der Fig. 12 entsprechende Darstellung auf der Grundlage einer festgelegten elektrischer Speichereinheit.

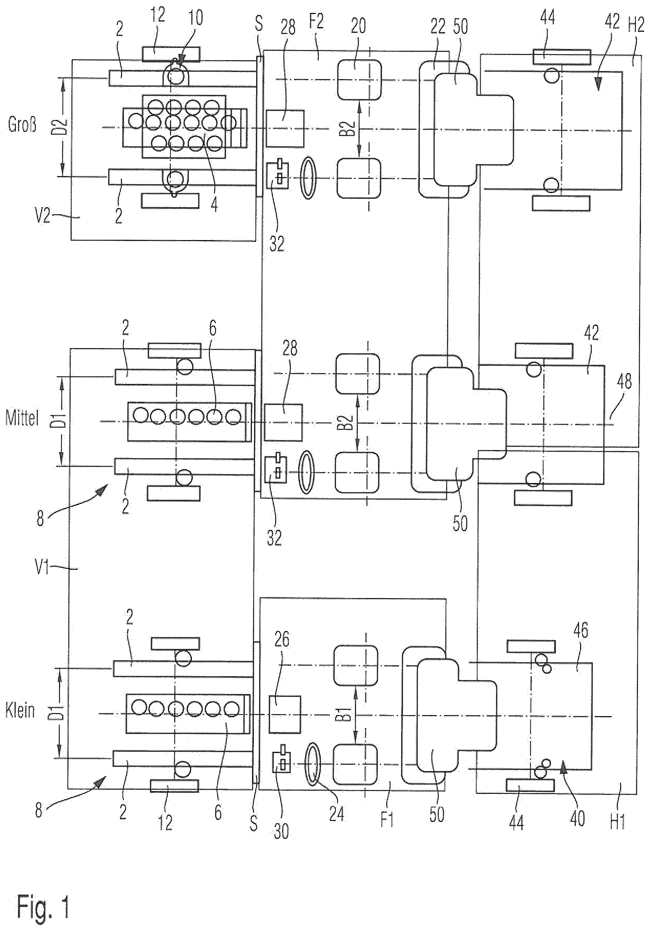

Fig. 1 zeigt in schematischer Darstellung eine Übersicht zu den Kombinationsmöglichkeiten, die sich für eine Gruppe von Kraftfahrzeugen aus zwei Vorderwagenmodulen V1 und V2, zwei Fahrgastzellenmodulen F1 und F2 sowie zwei Heckmodulen H1 und H2 ergibt. Die Verbindung zwischen Vorderwagenmodul V1 bzw. V2 und Fahrgastzellenmodul F1 bzw. F2 erfolgt über eine "kommunale" Stirnwand S. Im Verbindungsbereich zwischen Fahrgastzellenmodul F1 bzw. F2 und Heckmodul H1 bzw. H2 ist ein einheitlicher elektrischer Energiespeicher E vorgesehen. Die Indizes 1 bzw. 2 stehen hierbei jeweils für die einfachere "Basis-Variante" bzw. die aufwändiger ausgestaltete "High-Variante".

Die Vorderwagenmodule V1 und V2 nehmen mit ihren vorderen Längsträgern 2 ("Motorträger") unter anderem Antriebsaggregate ("Motoren") 4 bzw. 6 sowie Vorderachssysteme 8 bzw. 10 mit Vorderrädern 12 auf. Die beiden Vorderwagenmodule V1 und V2 unterscheiden sich im Abstand D1 bzw. D2 der Motorträger 2. Während das Vorderwagenmodul V2 zur Aufnahme großer Motoren 4, beispielsweise von V8-Motoren, ausgelegt ist und zum Beispiel einen Abstand D2 von 788 Millimetern aufweist, ist das Vorderwagenmodul 1 nur zur Aufnahme von kleineren Motoren 6, beispielsweise Reihenmotoren bis maximal sechs Zylindern vorgesehen, wofür ein Abstand D1 von zum Beispiel 762 Millimetern ausreichend ist. Ebenso sind die beiden Vorderwagenmodule V1 und V2 zur Aufnahme unterschiedlicher Vorderachssysteme 8 ausgebildet: Während das Vorderwagenmodul V1 ein vergleichsweise einfach aufgebautes Vorderachssystem 8, wie beispielsweise eine Federbeinachse, aufnimmt, ist das Vorderwagenmodul V2 zur Aufnahme eines aufwändigeren Vorderachssystems 10, wie beispielsweise einer Doppelquerlenkerachse, ausgelegt. Außerdem ist das Vorderwagenmodul V2 in der Lage, ein Wankstabilisierungssystem ("Anti Roll System ARS") aufzunehmen, also eine die beiden Vorderräder 12 verbindendes System, das bei Kurvenfahrt die Neigung des Fahrzeugaufbaus teilweise oder vollständig unterbindet.

Die Fahrgastzellenmodule F1 und F2 nehmen unter anderem jeweils Vordersitze 20, Fondsitze 22, ein Lenkrad 24, Klimatisierungseinheiten 26 bzw. 28 und Fahrerassistenzsysteme 30 bzw. 32, wie beispielsweise so genannte "Head-Up-Displays", auf. Während das Fahrgastzellenmodul F1 einen Abstand B1 von zum Beispiel 375 Millimetern zwischen den Vordersitzen 20 hat, weist das Fahrgastzellenmodul F2 einen größeren Abstand B2 von zum Beispiel 395 Millimetern auf, wodurch ein großzügigeres Raumangebot für Fahrer und Beifahrer entsteht. Ferner unterscheiden sich die beiden Fahrgastzellenmodule F1 und F2 in der Komplexität der Klimatisierungseinheiten 26 bzw. 28: Während die Klimatisierungseinheit 26 für Fahrer und Beifahrer getrennt regelbar ist und in eingeschränktem Maße auch die Klimatisierung des Fondraums übernimmt (so genannte "2,5-Zonen-Klimatisierungseinheit"), ist die Klimatisierungseinrichtung 28 als "4-Zonen-Klimatisierungseinheit" mit getrennten Einstellmöglichkeiten für Fahrer, Beifahrer und die beiden außen sitzenden Fondpassagiere ausgelegt. Auch die Head-Up-Displays 30 und 32 unterscheiden sich in ihrem Leistungsvermögen, wie zum Beispiel der Größe der Projektionsfläche, wobei das "High"- Head-Up-Display 32 aufgrund seiner größeren Leistungsfähigkeit einen größeren Bauraumbedarf hat.

Die Heckmodule H1 und H2 nehmen unter anderem Hinterachssysteme 40 bzw. 42 mit Hinterrädern 44 sowie ein Pannenradsystem 46 und ein Hinterachsregelsystem 48 auf. Während das Heckmodul V1 zur Aufnahme eines vergleichsweise einfach aufgebauten Hinterachssystems 40 (beispielsweise einer Raumlenkerachse mit fünf Lenkern, zum Beispiel mit getrennten Feder- / Dämpferelementen, ohne Wankstabilisierungssystem) ausgebildet ist, nimmt das Heckmodul H2 ein komplexer aufgebautes Hinterachssystem 42 mit einer stärkeren Komfortorientierung auf (beispielsweise eine Raumlenkerachse mit fünf Lenkern, zum Beispiel mit einer Federbeineinheit, die beispielsweise an einem Sturzlenker oder am Radträger angeordnet sein kann, gegebenenfalls mit Wankstabilisierungssystem und/oder mit einem Hinterachslenksystem). Eine Besonderheit bildet hierbei das Hinterachssystem 42, da es auch "raumfunktional" ausgelegt sein kann, beispielsweise für Kraftfahrzeuge der Kombinationsbauart und/oder so genannte Sports-Utility-Vehicles. Für diese Art von Kraftfahrzeugen ist das Hinterachssystem so ausgelegt, dass es einen möglichst großen und breiten Gepäckraum ermöglicht. Das Pannenradsystem 46 kann ein vollwertiges Fahrzeugrad 12 bzw. 44 oder ein Notrad oder gar kein Ersatzrad aufweisen. Das Hinterachsregelsystem 48 kann je nach Ausstattungsgrad beispielsweise unterschiedliche Steuergeräte, eine Luftfederung etc. aufweisen.

Im Übergangsbereich zwischen den Fahrgastzellenmodulen F1 bzw. F2 und den Heckmodulen H1 bzw. H2 ist ein einheitliches Energiespeichermodul 50 vorgesehen.

Durch Kombination der beiden Vorderwagenmodule V1 und V2 mit den beiden Fahrgastzellenmodulen F1 und F2 ergeben sich Kraftfahrzeuge in drei verschiedenen Fahrzeugklassen, die durch die Begriffe "Klein", "Mittel" und "Groß" gekennzeichnet sind. Diese Begriffe stehen beispielsweise für "Mittelklasse", "obere Mittelklasse" und "Oberklasse". Die Überlappungsbereiche der einzelnen Module V1 und V2 bzw. F1 und F2 geben die Kombinationsmöglichkeiten an.

Durch Kombination der beiden Fahrgastzellenmodule F1 und F2 mit den beiden Heckmodulen H1 und H2 ergeben sich weitere Varianten. Auch hier geben die Überlappungsbereiche der einzelnen Module F1 und F2 bzw. H1 und H2 die Kombinationsmöglichkeiten an.

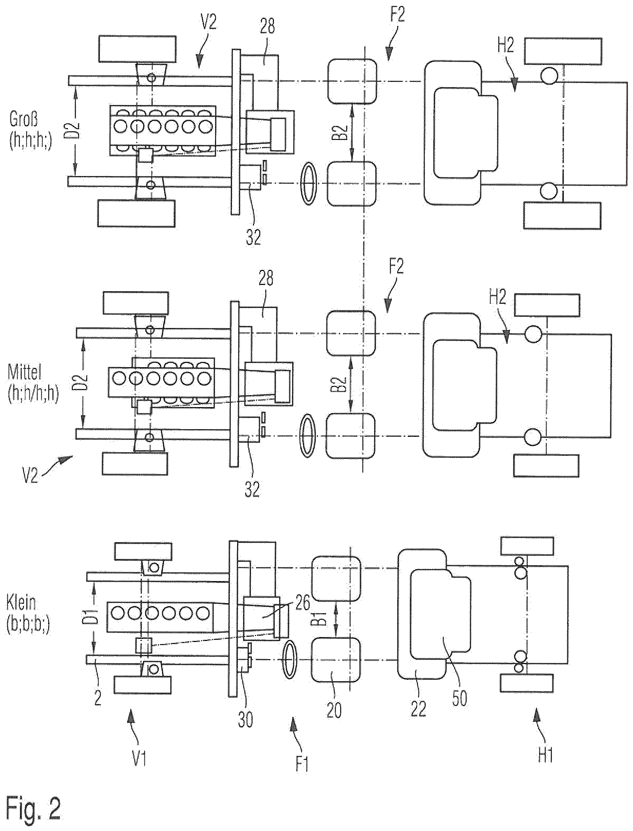

Die Kombinationsmöglichkeiten werden beispielhaft anhand der Fig. 2 bis 4 erläutert. Hierbei entsprechen die Bezeichnungen "KKL", "MKL" und "GKL" den Bezeichnungen "Klein", "Mittel" und "Groß". Die Bezeichnungen "b" bzw. "h" entsprechen den Indizes 1 bzw. 2 und stehen dementsprechend für die einfachere ("Basis") bzw. die aufwändigere ("High") Ausführung.

Die Kraftfahrzeuge der Fahrzeugklasse "Klein" werden beispielsweise aus der Kombination der Module mit dem Index 1 gebildet, also aus den Modulen V1, F1 und H1 ("b; b; b"). In analoger Weise werden die Kraftfahrzeuge der Fahrzeugklasse "Groß" immer aus der Kombination der Module mit dem Index 2 gebildet, also aus den Modulen V2, F2 und H2 ("h; h; h").

Neben diesen bevorzugten Kombinationen für die Fahrzeugklassen "Klein" und "Groß" jeweils "in einer horizontalen Ebene" ist es jedoch grundsätzlich bei den Fahrzeugklassen "Klein" und "Groß" auch möglich, mit einem Modul in die nächst höhere bzw. in die nächsttiefere Ebene zu wechseln.

Für die Kraftfahrzeuge der Fahrzeugklasse "Mittel" sind mehrere Möglichkeiten dargestellt.

In Fig. 2 ist ein Kraftfahrzeug der Fahrzeugklasse "Mittel" dargestellt, mit folgenden Modulen: einem Vorderwagenmodul V2 mit dem größeren Abstand D2 der Motorträger 2 (mit "h" bezeichnet), einem Fahrgastzellenmodul F2 mit "4-Zonen-Klimatisierungseinheit" 28 und "großem Head-Up-Display" 32 sowie mit großem Abstand B2 zwischen den Vordersitzen 20 (mit "h/h" bezeichnet) und mit einem Heckmodul H2 (mit "h" bezeichnet), also in der Kombination "h; h/h; h". Bei diesem Kraftfahrzeug handelt es sich um ein sehr hochwertiges Fahrzeug, mit der Möglichkeit einer "großen" Motorisierung und einem aufwändigen Vorderachssystem sowie einem komfortablen Fahrgastraum, beispielsweise einer Limousine oder einem (viertürigen) Coupe.

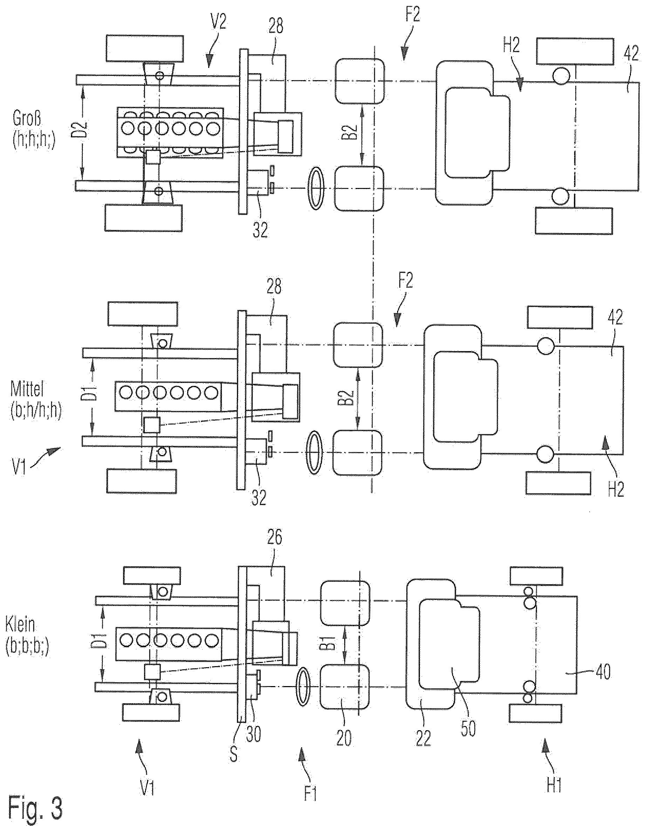

In Fig. 3 ist ein Kraftfahrzeug der Fahrzeugklasse "Mittel" dargestellt, mit folgenden Modulen: einem Vorderwagenmodul V1 mit dem kleineren Abstand D1 der Motorträger 2 (mit "b" bezeichnet), einem Fahrgastzellenmodul F2 mit "4-Zonen-Klimatisierungseinheit" 28 und "großem Head-Up-Display" 32 sowie mit großem Abstand B2 zwischen den Vordersitzen 20 (mit "h/h" bezeichnet) und mit einem Heckmodul H2 (mit "h" bezeichnet), also in der Kombination "b; h/h; h". Bei diesem Kraftfahrzeug handelt es sich um ein im Fahrgastraum sehr hochwertiges Fahrzeug, jedoch mit Einschränkungen bei der Motorisierung und dem Vorderachssystem, beispielsweise einer Limousine oder einem Fahrzeug der Kombinationsbauart.

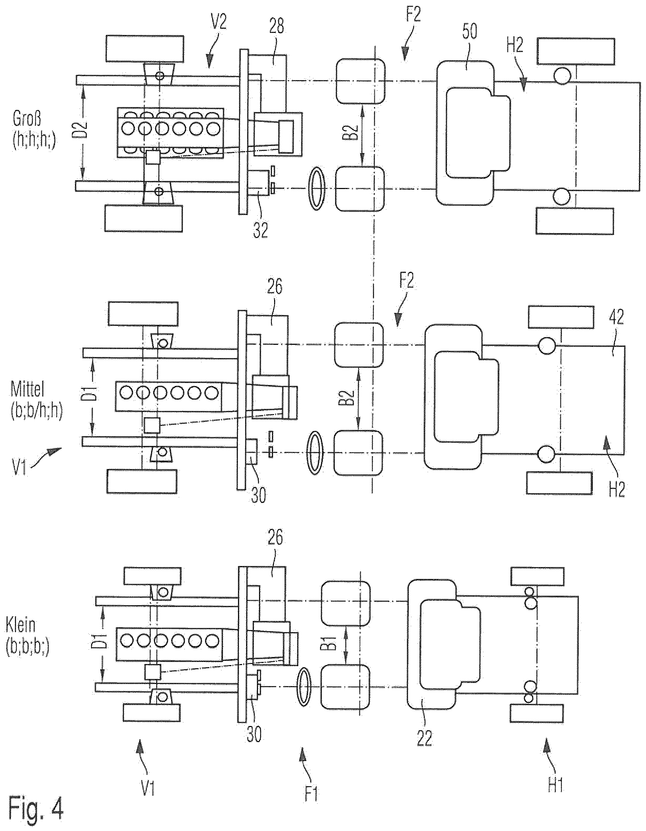

In Fig. 4 ist ein Kraftfahrzeug der Fahrzeugklasse "Mittel" dargestellt, mit folgenden Modulen: einem Vorderwagenmodul V1 mit dem kleineren Abstand D1 der Motorträger 2 (mit "b" bezeichnet), einem Fahrgastzellenmodul F2 mit "2,5-Zonen-Klimatisierungseinheit" 26 und "kleinem Head-Up-Display" 30, jedoch mit großem Abstand B2 zwischen den Vordersitzen 20 (mit "b/h" bezeichnet) und mit einem Heckmodul H2 (mit "h" bezeichnet), also in der Kombination "b; b/h; h". Bei diesem Kraftfahrzeug handelt es sich beispielsweise um ein Cabrio, das für die Fondsitze 22 keine separat zu regelnde Klimatisierungseinrichtung benötigt.

Selbstverständlich sind weitere Kombinationen möglich. Beispielsweise kann das Fahrzeug gemäß Fig. 4 auch mit einem Vorderwagenmodul V2 versehen werden.

Hinsichtlich des Heckmoduls H2 ist bei den Kraftfahrzeugen der Fahrzeugklasse "Mittel" in den Fig. 2 bis 4 folgende Besonderheit zu entnehmen: Hier kann je nach Fahrzeugtyp zwischen einem "komfortablen Hinterachssystem 42" und einem "raumfunktionalen Hinterachssystem 42" gewählt werden, beispielsweise für Kraftfahrzeuge vom Typ "Limousine" oder "Coupe" bzw. für Kraftfahrzeuge vom Typ "Kombinationsbauart" oder "Sports Utility Vehicle".

Die Hinterachssysteme 40 und 42 sind beispielsweise als Mehrlenkerachsen (zum Beispiel mit fünf Lenkern) ausgebildet und haben zum Beispiel die oben beschriebenen unterschiedlichen Ausprägungen: eine eher kostengünstige Ausgestaltung eines Hinterachssystems 40 mit getrennten Federn und Dämpfern, eine aufwändigere Ausgestaltung eines Hinterachssystems 42 (beispielsweise mit einer Anbindung eines so genannten Federbeins an einem Sturzlenker), die einen guten Kompromiss zwischen Raumfunktionalität einerseits und Komfort sowie Akustik andererseits darstellt sowie eine aufwändigere Ausgestaltung eines Hinterachssystems 42, die den Schwerpunkt auf Komfort und Akustik bei hoher Dynamik legt, beispielsweise mit einer Anbindung des Federbeins an den Radträger.

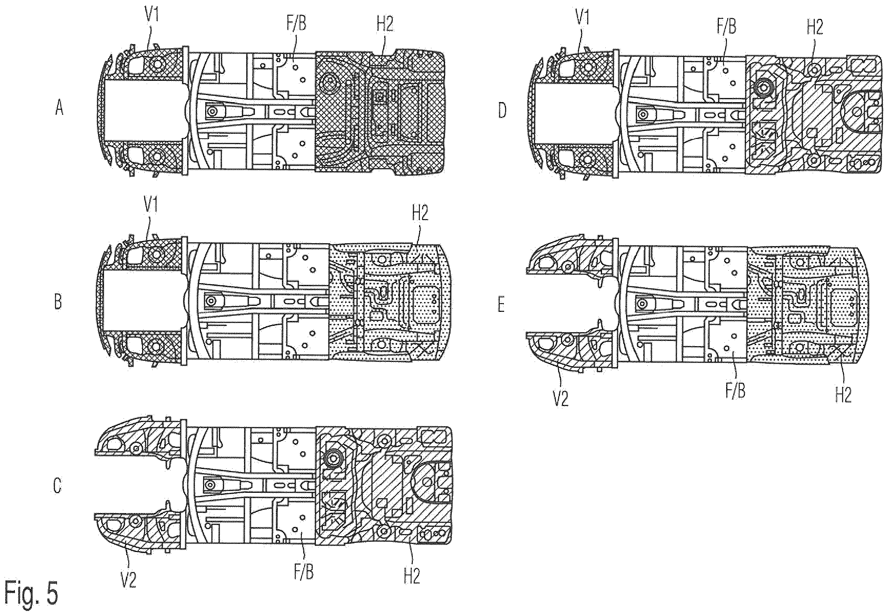

Fig. 5 zeigt in anschaulicher Weise nochmals einige Kombinationsmöglichkeiten.

Bei dem Kraftfahrzeug A handelt es sich um ein Mittelklassefahrzeug mit einem Vorderwagenmodul V1 und einem Heckmodul H1.

Bei dem Kraftfahrzeug B handelt es sich um ein Fahrzeug der oberen Mittelklasse mit einem Vorderwagenmodul V1 und einem Heckmodul H2 in raumfunktionaler Ausgestaltung, also beispielsweise um ein "Sports Utility Vehicle" oberen Mittelklasse oder um ein Fahrzeug der oberen Mittelklasse der Kombinationsbauart.

Bei dem Kraftfahrzeug C handelt es sich um ein Fahrzeug der Oberklasse mit einem Vorderwagenmodul V2 und einem Heckmodul H2 in komfortorientierter Ausgestaltung, also beispielsweise um eine Limousine, ein Coupe oder ein Cabrio.

Bei dem Kraftfahrzeug D handelt es sich um ein Fahrzeug der oberen Mittelklasse mit einem Vorderwagenmodul V1 und einem Heckmodul H2 in komfortorientierter Ausgestaltung, also beispielsweise um eine Limousine.

Bei dem Kraftfahrzeug E handelt es sich um ein Fahrzeug der Oberklasse mit einem Vorderwagenmodul V2 und einem Heckmodul H2 in raumfunktionaler Ausgestaltung, also beispielsweise um ein "Sports Utility Vehicle" der Oberklasse.

Aus den einzelnen Darstellungen der Fig. 5 geht in besonders anschaulicher Weise hervor, dass die nicht näher differenzierten Fahrgastzellenmodule F auf einer einheitlichen Bodengruppe B beruhen, die sich grundsätzlich nicht unterscheidet.

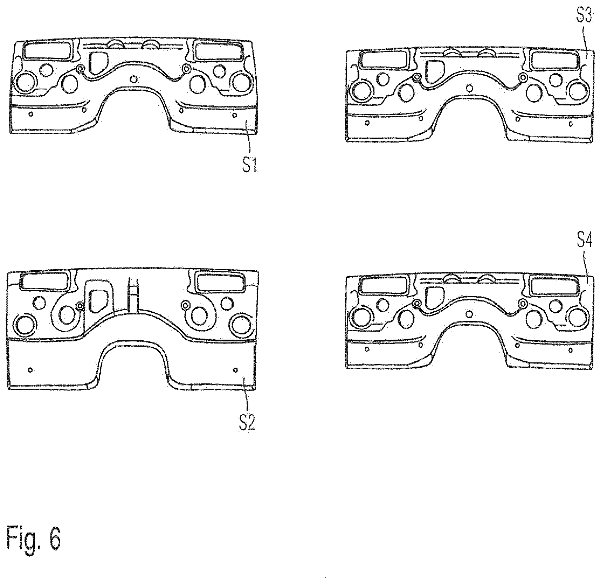

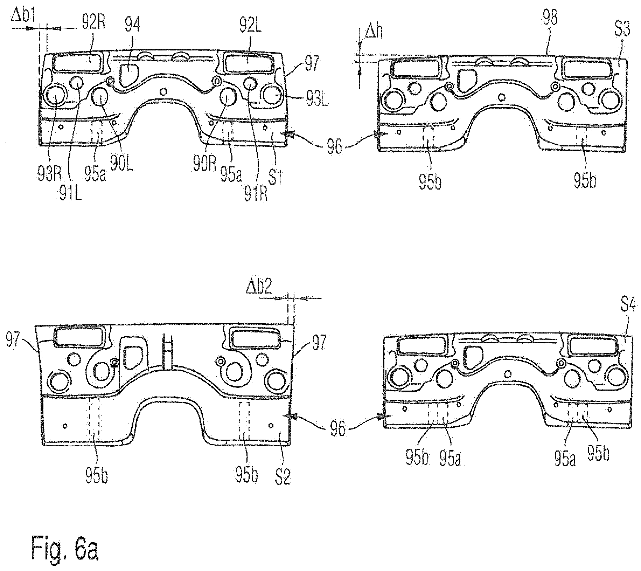

Fig. 6 zeigt unterschiedliche Stirnwände S in vier Ausgestaltungen S1 bis S4. Alle Stirnwände S1 bis S4 haben ein einheitliches Lochbild der Durchbrüche zwischen Motorraum und Fahrgastraum, weisen jedoch eine unterschiedliche Geometrie auf, mit Ausnahme der Stirnwand S2, die zumindest in Teilbereichen auch ein abweichendes Lochbild aufweist. Die Stirnwand S1 gehört zu einem Kraftfahrzeug der Mittelklasse, die Stirnwand S2 zu einem Kraftfahrzeug der Oberklasse vom Typ "Sports Utility Vehicle", die Stirnwand S3 zu einem Kraftfahrzeug der oberen Mittelklasse und die Stirnwand S4 gehört zu einem Kraftfahrzeug der Oberklasse.

In Fig. 6a sind an den oben beschriebenen Stirnwänden S1 bis S4 weitere Einzelheiten bezeichnet. Die Blickrichtung auf die Stirnwände S1 bis S4 ist, ebenso wie in Fig. 6, vom Innenraum aus.

Die einzelnen Durchbrüche an den Stirnwänden S1 bis S4 sind am Beispiel der Stirnwand S1 näher spezifiziert, wobei die Buchstaben "L" und "R" für "Linkslenker" bzw. "Rechtslenker" stehen: Durchbrüche 90L und 90R für eine Lenksäule, Durchbrüche 91L und 91R für ein Bremsgerät, Durchbrüche 92R und 92L für die Ansaugung der Heizungsluft, Durchbrüche 93R und 93L für eine Kabeltülle eines Karosseriekabelbaums sowie ein Durchbruch 94, der eine Medienschnittstelle für eine Klimaanlage des Kraftfahrzeugs bildet.

Die jeweiligen Stirnwände S1 bis S4 können sowohl mit den Durchbrüchen für die Linkslenkervarianten als auch mit den Durchbrüchen für die Rechtslenkervarianten versehen sein, wobei die jeweils nicht benötigten Durchbrüche durch Stopfen oder dergleichen verschlossen werden.

Alternativ können solche Stirnwände S1 bis S4 in die Rohkarosserie eingesetzt werden, die keine Durchbrüche aufweisen (oder nur solche Durchbrüche, die bei Links- und bei Rechtslenkervarianten einheitlich sind), wobei die bei Links- und Rechtslenkervarianten unterschiedlichen Durchbrüche in den Stirnwänden S1 bis S4 erst im weiteren Verlauf an der Fertigungsstraße des Kraftfahrzeugs durch Stanzvorrichtungen oder dergleichen eingebracht werden ("Late Configuration").

Mit den Bezugszahlen 95a und 95b ist die Lage derjenigen Verbindungsbereiche angegeben, in denen die vorderen Längsträger 2 des Kraftfahrzeugs an die Vorderseite der Stirnwände S1 bis S4 anschließen. Hierbei stehen die Verbindungsbereiche 95a für den Anschluss eines Vorderwagenmoduls V1 ("Basis-Variante") und die Verbindungsbereiche 95b für den Anschluss eines Vorderwagenmoduls V2 ("High-Variante"). Bei der Stirnwand S2 ist hierbei noch die Besonderheit gegeben, dass der Verbindungsbereich 95b eine größere Höhenerstreckung hat, entsprechend dem höher ausgeführten Profil des Längsträgers 2 im Fall des zugehörigen Kraftfahrzeugs der Oberklasse vom Typ "Sports Utility Vehicle".

Wie insbesondere an der Stirnwand S2 ersichtlich ist, können sich die einzelnen Stirnwände S1 bis S4 hinsichtlich ihrer Höhenerstreckung h unterscheiden. So hat die Stirnwand S2 entsprechend des zugehörigen Kraftfahrzeugs der Oberklasse vom Typ "Sports Utility Vehicle" eine größere Höhenerstreckung h als die übrigen Stirnwände S1, S3 und S4 der zugehörigen Kraftfahrzeuge vom Typ "Limousine", insbesondere einen großflächigeren unteren Bereich 96, der als Anschlussfeld für die vorderen Längsträger 2 dient.

Weiterhin kann durch entsprechenden Beschnitt am linken und rechten Randbereich 97 und/oder am oberseitigen Randbereich 98 eine Anpassung der Stirnwände S1 bis S4 an die Breite und/oder an die Geometrie des jeweiligen Kraftfahrzeugs erfolgen. So erfolgt bei der Stirnwand S1 des zugehörigen Kraftfahrzeugs der Mittelklasse ein seitlicher Beschnitt in den Randbereichen 97 derart, dass sich bei diesem Kraftfahrzeugtyp eine geringere Innenbreite ergibt, symbolisiert durch die Maßangabe Δb1. In umgekehrter Weise ist die Stirnwand S2 an ihren seitlichen Randbereichen 97 so beschnitten, dass die Stirnwand S2 oberseitig eine größere Innenbreite Δb2 erzeugt, entsprechend dem zugehörigen Kraftfahrzeug der Oberklasse vom Typ "Sports Utility Vehicle". Wie anhand der Stirnwand S3 ersichtlich, kann durch einen Beschnitt am oberseitigen Randbereich 98 eine Anpassung an den für die jeweilige Fahrzeugklasse typischen Verlauf des so genannten Windlaufs, also des in Fahrzeugquerrichtung Y verlaufenden Trägers unterhalb der Windschutzscheibe des Kraftfahrzeugs, erfolgen. Im vorliegenden Fall kann die Stirnwand S3 an einen seitlich leicht nach unten gezogenen Windlauf angepasst werden.

Maßgeblich ist dabei grundsätzlich, dass das Ausgangsmaterial für die einheitlichen Stirnwände S1 bis S4 die Breite bzw. Höhe der "größten" Stirnwand aufweist, so dass die Variation an den Randbereichen 97 bzw. 98 bzw. am unteren Randbereich (mit seiner Ausbauchung für den Durchtritt des Getriebegehäuses) durch Beschnitt erfolgen kann.

Die Stirnwand S2 hat, wie bereits oben erwähnt, ein von den Stirnwänden S1 sowie S3 und S4 teilweise abweichendes Lochbild. Außerdem ist die Stirnwand S2 nicht nur höher, sondern hat in ihrem unteren Bereich 96 auch eine andere Geometrie als die Stirnwände S1 sowie S3 und S4. Grundsätzlich könnte jedoch auch die Stirnwand S2 einheitlich wie die Stirnwände S1 sowie S3 und S4 gestaltet sein.

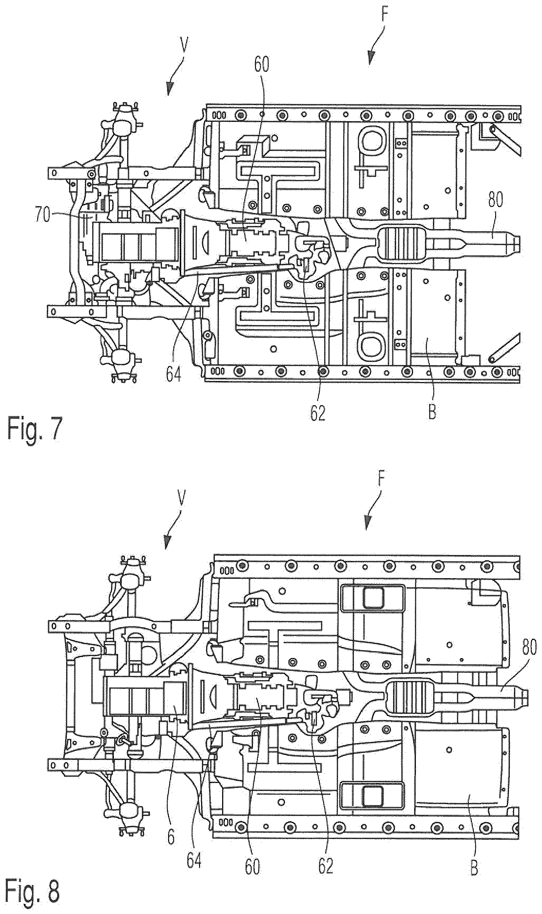

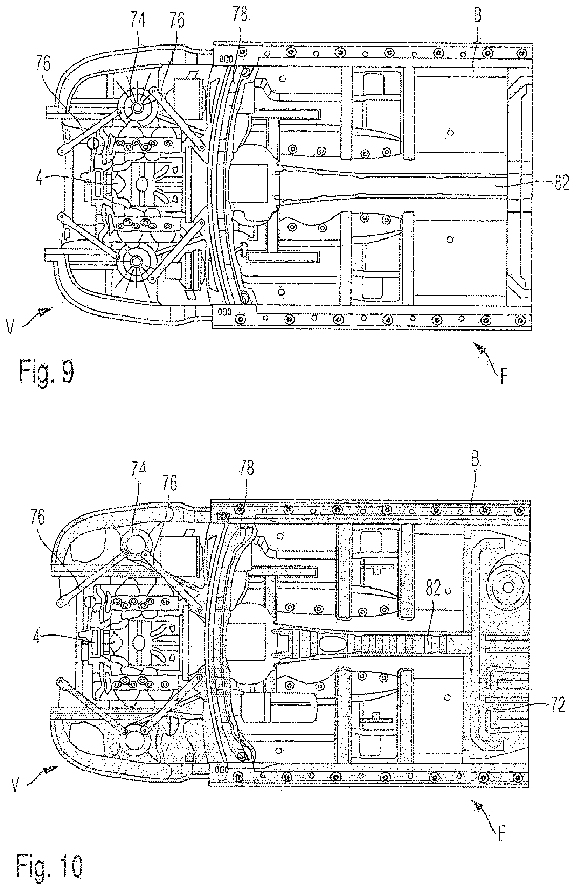

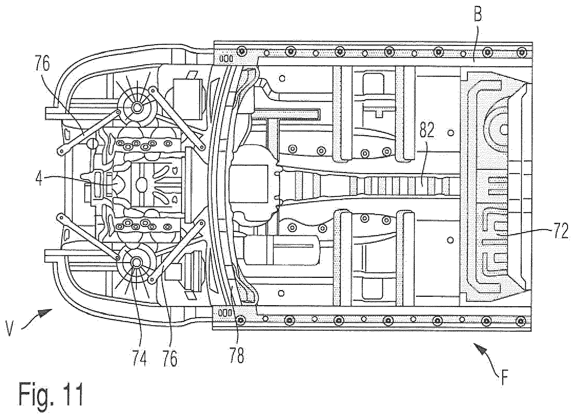

Die Fig. 7 bis 11 zeigen Draufsichten auf verschiedene Kombinationen eines Vorderwagenmoduls V mit einem Fahrgastzellenmodul F. Das Fahrgastzellenmodul F ist teilweise mit und teilweise ohne Mitteltunnel dargestellt. Aus allen Darstellungen des Fahrgastzellenmoduls F geht anschaulich hervor, dass das Fahrgastzellenmodul F von einem einheitlichen Bodenblech B gebildet wird. Je nach Typ des Fahrzeugs ist das Bodenblech B mit Verstärkungen versehen. Gegebenenfalls sind die Sitzquerträger konsolenartig erhöht, um eine höhere Sitzposition zu erreichen.

Im Einzelnen sind in den Fig. 7 bis 11 folgende Punkte hervorzuheben: Motoren (Reihen-Vierzylinder bzw. V8) mit angeflanschtem Getriebe 60, mit einem Verteilergetriebeausgang 62 mit einer "eng" am Getriebe 60 verlaufenden Abtriebswelle 64, die zu einem Vorderachsgetriebe 66 führt sowie Antriebswellen 68 zu den Vorderrädern 12 (Allradantrieb), Vorderachssysteme mit unterschiedlichen Vorderachsträgern, Lenkgetriebe 70, zusätzliche Blechschalen 72 im hinteren Bereich des Fahrgastzellenmoduls F, Federbeinstützen 74 mit Versteifungsstreben 76, die unter anderem an einem so genannten Windlauf 78 angebunden sind und eine Abgasanlage 80, die an der Unterseite des Mitteltunnels 82 verläuft.

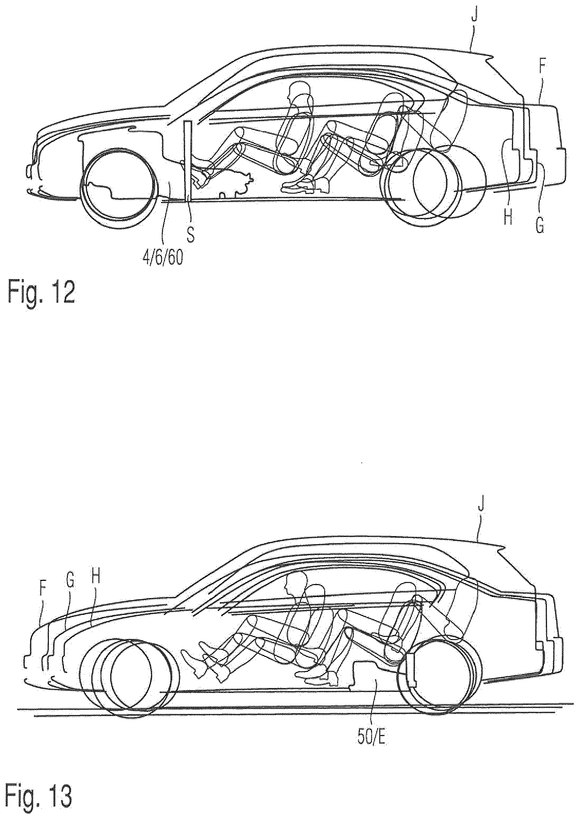

Aus Fig. 12 geht in anschaulicher Weise die Ableitung verschiedener Kraftfahrzeuge bei einheitlicher Lage des Antriebsstrangs hervor: Durch die oben beschriebenen Skalierungsmaßnahmen und zusätzlich ein Höhenraster der Stirnwand S können unterschiedliche Fahrzeugarten abgeleitet werden, nämlich eine Limousine F der Oberklasse, eine Limousine G der oberen Mittelklasse, eine Limousine H der Mittelklasse sowie ein Sports Utility Vehicle J der Oberklasse.

In der analogen Darstellung der Fig. 13 ist die Ableitung verschiedener Kraftfahrzeuge bei einheitlicher Lage des kommunalen Energiespeichermoduls E dargestellt: Durch entsprechende Maßnahmen zur Längenskalierung im Hinterwagen können unterschiedliche Fahrzeugarten abgeleitet werden, nämlich wiederum eine Limousine F der Oberklasse, eine Limousine G der oberen Mittelklasse, eine Limousine H der Mittelklasse sowie ein Sports Utility Vehicle J der Oberklasse.

Die Erfindung lässt sich wie folgt zusammenfassen: Durch die Kombination wenigstens zweier unterschiedlicher Vorderwagen- und Fahrgastzellenmodule V1 bzw. V2 und F1 bzw. F2 können wenigstens zwei Gruppen von Kraftfahrzeugen gebildet werden, die unterschiedlichen Fahrzeugklassen angehören. Hierzu sind die beiden Vorderwagenmodule V1 und V2 mit unterschiedlichen Abständen D1 und D2 der Motorträger 2 und die beiden Fahrgastzellenmodule F1 und F2 mit unterschiedlichen Abständen B1 und B2 der Vordersitze 20 versehen. Die einzelnen Varianten jedes dieser vier Module V1, V2, F1 und F2 sind dabei als Gleichteile ausgeführt und werden für das jeweilige Modul V1, V2, F1 und F2 in einheitlichen Tiefziehwerkzeugen hergestellt.

## Patentansprüche

1. Gruppe von Kraftfahrzeugen, wobei die Kraftfahrzeuge jeder Gruppe wenigstens ein Modul aufweisen, das als Gleichteil ausgeführt ist, wobei die Gleichteile Rohbauteile sind, die mit demselben Tiefziehwerkzeug oder mit demselben Gusswerkzeug oder mit demselben Strangpresswerkzeug hergestellt werden, wobei wenigstens zwei Vorderwagenmodule (V, V1, V2) mit unterschiedlichen Abständen (D1, D2) der Motorträger (2) und wenigstens zwei Fahrgastzellenmodule (F, F1, F2) mit unterschiedlichen Abständen der Vordersitze (20) vorgesehen sind, wobei die Vorderwagenmodule (V, V1, V2) und die Fahrgastzellenmodule (F, F1, F2) so kombinierbar sind, dass aus zwei Vorderwagenmodulen (V, V1, V2) und zwei Fahrgastzellenmodulen (F, F1, F2) drei Gruppen von Kraftfahrzeugen der unterschiedlichen Fahrzeugklassen "Klein", "Mittel" und "Groß" herstellbar sind,
- wobei die Kraftfahrzeuge der Fahrzeugklasse "Klein" aus der Kombination des Vorderwagenmoduls (V1) und des Fahrgastzellenmoduls (F1) der Basis-Variante gebildet werden,
- wobei die Kraftfahrzeuge der Fahrzeugklasse "Groß" aus der Kombination des Vorderwagenmoduls (V2) und des Fahrgastzellenmoduls (F2) der High-Variante gebildet werden und
- wobei die Kraftfahrzeuge der Fahrzeugklasse "Mittel" aus der Kombination des Vorderwagenmoduls (V1) der Basis-Variante und des Fahrgastzellenmoduls (F2) der High-Variante gebildet werden oder
- wobei die Kraftfahrzeuge der Fahrzeugklasse "Mittel" aus der Kombination des Vorderwagenmoduls (V2) der High-Variante und des Fahrgastzellenmoduls (F1) der Basis-Variante gebildet werden.

2. Gruppe von Kraftfahrzeugen nach Anspruch 1,
**dadurch gekennzeichnet, dass** die Vorderwagenmodule (V, V1, V2) zur Aufnahme unterschiedlicher Arten von Antriebssystemen und/oder Antriebsaggregaten (4, 6) und/oder Getrieben und/oder Vorderachssystemen (8, 10) ausgebildet sind.

3. Gruppe von Kraftfahrzeugen nach Anspruch 1 oder 2,
**dadurch gekennzeichnet, dass** die Fahrgastzellenmodule (F, F1, F2) zur unterschiedlichen Positionierung von Fahrer- und Beifahrersitzen (20) und/oder zur Aufnahme unterschiedlicher Klimatisierungseinheiten (26, 28) und/oder Mittelkonsolen und/oder Fahrerassistenzeinheiten (30, 32) und/oder Entertainmenteinheiten ausgebildet sind.

4. Gruppe von Kraftfahrzeugen nach einem der vorgenannten Ansprüche,
**dadurch gekennzeichnet, dass** die Fahrgastzellenmodule (F, F1, F2) einen einheitlichen Stirnwandbereich (S, S1, S2, S3, S4) aufweisen, der zur Anbindung unterschiedlicher Vorderwagenmodule (V, V1, V2) ausgebildet ist.

5. Gruppe von Kraftfahrzeugen nach Anspruch 4,
**dadurch gekennzeichnet, dass** der Stirnwandbereich (S, S1, S2, S3, S4) einheitliche Verbindungsbereiche mit den Vorderwagenmodulen (V, V1, V2) und/oder einheitliche Durchbrüche für die Lenkung aufweist.

6. Gruppe von Kraftfahrzeugen nach einem der vorgenannten Ansprüche,
**dadurch gekennzeichnet, dass** zusätzlich wenigstens zwei Heckwagenmodule (H1, H2) vorgesehen sind.

7. Gruppe von Kraftfahrzeugen nach Anspruch 6,
**dadurch gekennzeichnet, dass** die Heckmodule (H1, H2) zur Aufnahme unterschiedlicher Hinterachssysteme (40, 42) und/oder Nachschalldämpfer und/oder Kraftstoffzusatzsystemen und/oder Hinterachsregelsystemen und/oder zur Aufnahme bzw. dem Entfall eines Ersatzrades ausgebildet sind.

8. Gruppe von Kraftfahrzeugen nach einem der vorgenannten Ansprüche, **dadurch gekennzeichnet, dass** im Übergangsbereich zwischen Fahrgastzellenmodul (F, F1, F2) und Heckmodul (H1, H2) ein Energiespeichermodul (50) vorgesehen ist.

9. Gruppe von Kraftfahrzeugen nach einem der vorgenannten Ansprüche, **dadurch gekennzeichnet, dass** die Bodengruppe (B) der Fahrgastzellenmodule (F, F1, F2) als Gleichteil ausgeführt sind.

## Claims

1. Group of motor vehicles, wherein the motor vehicles of each group have at least one module which is designed as a common part, wherein the common parts are bodyshell parts which are produced by the same deep-drawing tool or by the same casting tool or by the same extrusion tool, wherein at least two front-end modules (V, V1, V2) with different spacings (D1, D2) between the engine mounts (2) and at least two passenger cell modules (F, F1, F2) with different spacings between the front seats (20) are provided, wherein the front-end modules (V, V1, V2) and the passenger cell modules (F, F1, F2) can be combined in such a way that three groups of motor vehicles of the different vehicle classes "compact", "midsize" and "large" can be produced from two front-end modules (V, V1, V2) and two passenger cell modules (F, F1, F2),
- wherein the motor vehicles of the vehicle class "compact" are formed from the combination of the front-end module (V1) and the passenger cell module (F1) of the base variant,
- wherein the motor vehicles of the vehicle class "large" are formed from the combination of the front-end module (V2) and the passenger cell module (F2) of the high variant, and
- wherein the motor vehicles of the vehicle class "midsize" are formed from the combination of the front-end module (V1) of the base variant and the passenger cell module (F2) of the high variant, or
- wherein the motor vehicles of the vehicle class "midsize" are formed from the combination of the front-end module (V2) of the high variant and the passenger cell module (F1) of the base variant.

2. Group of motor vehicles according to Claim 1,
**characterized in that** the front-end modules (V, V1, V2) are configured for accommodation of different types of drive systems and/or drive units (4, 6) and/or transmissions and/or front-axle systems (8, 10).

3. Group of motor vehicles according to Claim 1 or 2, **characterized in that** the passenger cell modules (F, F1, F2) are configured for different positioning of driver and front-passenger seats (20) and/or for accommodation of different air-conditioning units (26, 28) and/or centre consoles and/or driver assistance units (30, 32) and/or entertainment units.

4. Group of motor vehicles according to one of the preceding claims,
**characterized in that** the passenger cell modules (F, F1, F2) have a uniform bulkhead region (S, S1, S2, S3, S4) which is configured for attachment of different front-end modules (V, V1, V2).

5. Group of motor vehicles according to Claim 4,
**characterized in that** the bulkhead region (S, S1, S2, S3, S4) has uniform regions of connection with respect to the front-end modules (V, V1, V2) and/or uniform apertures for the steering.

6. Group of motor vehicles according to one of the preceding claims,
**characterized in that** at least two rear-end modules (H1, H2) are additionally provided.

7. Group of motor vehicles according to Claim 6,
**characterized in that** the rear-end modules (H1, H2) are configured for accommodation of different rear-axle systems (40, 42) and/or rear silencers and/or fuel additive systems and/or rear-axle control systems and/or for accommodation or omission of a spare wheel.

8. Group of motor vehicles according to one of the preceding claims,
**characterized in that** an energy storage module (50) is provided in the transition region between passenger cell module (F, F1, F2) and rear-end module (H1, H2).

9. Group of motor vehicles according to one of the preceding claims,
**characterized in that** the floor assembly (B) of the passenger cell modules (F, F1, F2) is designed as a common part.

## Revendications

1. Groupe de véhicules automobiles, les véhicules automobiles de chaque groupe comportant au moins un module qui est conçu comme une partie identique, les parties identiques étant des composants bruts qui sont fabriqués avec le même outil d'emboutissage ou avec le même outil de coulée ou avec le même outil d'extrusion, au moins deux modules de caisse avant (V, V1, V2) étant prévus à des distances différentes (D1, D2) des supports de moteur (2) et au moins deux modules d'habitacle (F, F1, F2) étant prévus à des distances différentes des sièges avant (20), les modules de caisse avant (V, V1, V2) et les modules d'habitacle (F, F1, F2) pouvant être combinés de telle sorte que trois groupes de véhicules automobiles de différentes gammes de véhicules « petite », « moyenne » et « grande » peuvent être produits à partir de deux modules de caisse avant (V, V1, V2) et de deux modules d'habitacle (F, F1, F2),
- les véhicules automobiles de la gamme de véhicules « petite » étant formés à partir de la combinaison du module de caisse avant (V1) et du module d'habitacle (F1) de la variante de base,
- les véhicules automobiles de la gamme de véhicules « grande » étant formés à partir de la combinaison du module de caisse avant (V2) et du module d'habitacle (F2) de la variante haute et
- les véhicules automobiles de la gamme de véhicule « moyenne » étant formés à partir de la combinaison du module de caisse avant (V1) de la variante de base et du module d'habitacle (F2) de la variante haute, ou
- les véhicules automobile de la gamme de véhicules « moyenne » étant formés à partir de la combinaison du module de caisse avant (V2) de la variante haute et du module d'habitacle (F1) de la variante de base.

2. Groupe de véhicules automobiles selon la revendication 1, **caractérisé en ce que** les modules de caisse avant (V, V1, V2) sont conçus pour recevoir différents types de systèmes d'entraînement et/ou d'unités d'entraînement (4, 6) et/ou de transmissions et/ou de systèmes d'essieux avant (8, 10).

3. Groupe de véhicules automobiles selon la revendication 1 ou 2, **caractérisé en ce que** les modules d'habitacle (F, F1, F2) sont conçus pour positionner différemment des sièges conducteur et passager (20) et/ou pour recevoir différentes unités de climatisation (26, 28) et/ou de consoles centrales et/ou d'unités d'aide à la conduite (30, 32) et/ou d'unités de divertissement.

4. Groupe de véhicules automobiles selon l'une des revendications précédentes, **caractérisé en ce que** les modules d'habitacle (F, F1, F2) comportent une zone de paroi avant standard (S, S1, S2, S3, S4) qui est conçue pour relier différents modules de caisse avant (V, V1, V2).

5. Groupe de véhicules automobiles selon la revendication 4, **caractérisé en ce que** la zone de paroi avant (S, S1, S2, S3, S4) comporte des zones de liaison standard avec les modules de caisse avant (V, V1, V2) et/ou des passages standard destinés à la direction.

6. Groupe de véhicules automobiles selon l'une des revendications précédentes, **caractérisé en ce qu'**au moins deux modules de caisse arrière (H1, H2) sont également prévus.

7. Groupe de véhicules automobiles selon la revendication 6, **caractérisé en ce que** les modules de caisse arrière (H1, H2) sont conçus pour recevoir différents systèmes d'essieux arrière (40, 42) et/ou silencieux arrière et/ou systèmes de carburant supplémentaires et/ou systèmes de régulation d'essieu arrière et/ou pour recevoir ou retirer une roue de secours.

8. Groupe de véhicules automobiles selon l'une des revendications précédentes, **caractérisé en ce qu'**un module de stockage d'énergie (50) est prévu dans la zone de transition entre le module d'habitacle (F, F1, F2) et le module arrière (H1, H2).

9. Groupe de véhicules automobiles selon l'une des revendications précédentes, **caractérisé en ce que** le groupe de plancher (B) des modules d'habitacle (F, F1, F2) est conçu comme une partie identique.
